# EUROPÄISCHE PATENTSCHRIFT

(11) **EP 2 860 052 B1**
(45) Veröffentlichungstag und Bekanntmachung des Hinweises auf die Patenterteilung: **20.07.2016**
(21) Anmeldenummer: 13187877.9
(22) Anmeldetag: 09.10.2013
(51) Int. Cl.: B60J 7/06, B60J 7/00

(54) **Dach für ein Kraftfahrzeug**
Roof for a motor vehicle
Toit pour véhicule automobile

(43) Veröffentlichungstag der Anmeldung: 15.04.2015
(73) Patentinhaber: MAGNA STEYR Engineering AG & Co KG, 8041 Graz (AT)
(72) Erfinder: Mayr, Franz, 8323 St.Marein bei Graz (AT); Rodler, Martin, 8160 Krottendorf (AT)
(74) Vertreter: Zangger, Bernd

(56) Entgegenhaltungen:
- DE-A1- 10 120 358
- DE-A1-102006 002 080

## Beschreibung

Die vorliegende Erfindung betrifft ein Dach für ein Kraftfahrzeug, insbesondere ein Targa-Dach, welches in eine Öffnungsstellung und in eine Schließstellung bringbar ist, umfassend ein Faltdach, und je eine linke und eine rechte Führungsschiene, wobei die linke und die rechte Führungsschiene verschiebbar sind.

Ein Dach dieser Art ist aus DE 10120358 A bekannt.

### Stand der Technik

Unter einem Targa-Dach wird grundsätzlich verstanden, dass dem zwischen Windschutzscheibenrahmen und der Verbindung der B-Säule eines Kraftfahrzeugs der Dachmittelteil vollständig entfernbar ist. Im Gegensatz zu einem Cabriolet weist ein Targa-Dach einen fest montierten Sicherheitsbügel auf. Das Dach bzw. Dachteile eines derart ausgebildeten Kraftfahrzeugs müssen dabei oft von Hand entnommen werden, und können im Kraftfahrzeug, wenn dort ein Ablageplatz dafür vorgesehen ist, oder sonst an einem anderen Ort abgelegt werden.

Aus der DE4100677A1 wird ein Hardtop-Dach beschrieben, welches über mehrere Stellungen zurücknehmbar ist. Das Dach ist in Abschnitte unterteilt, und zwar in eine vordere fixierte Platte, in welche die Windschutzscheibe aufgenommen ist, eine Zwischenplatte und eine hintere Platte. Die Zwischenplatte des Daches ist teleskopisch auf die hintere Platte zurücknehmbar und beide beweglichen Platten werden danach in das hintere Verdeck des Fahrzeugs zurückgenommen.

In der DE102006002080A1 wird ein seitenholmartiges Kopplungselement beschrieben, das mit dem Windschutzscheibenrahmen in Eingriff gebracht werden kann, wobei das Kopplungselement elektromotorisch antreibbar ist und wobei das Kopplungselement in einer Kopplungselementaufnahme im Dachteil längsverschiebbar aufgenommen ist.

### Zusammenfassung der Erfindung

Es ist eine Aufgabe der Erfindung, ein Dach für ein Kraftfahrzeug, insbesondere ein Targa-Dach, bereitzustellen, welches einfach und schnell handhabbar, und dabei im Kraftfahrzeug ohne wesentlichen Bauraumverlust im Kraftfahrzeug abgelegt werden kann, und weiters platzsparend aufgebaut und kostengünstig herstellbar ist.

Gelöst wird diese Aufgabe durch die Merkmale von Anspruch 1. Weiterbildungen der Erfindung sind Gegenstand der Unteransprüche.

Die Lösung der Aufgabe erfolgt durch ein Dach für ein Kraftfahrzeug, insbesondere ein Targa-Dach, welches in eine Öffnungsstellung und in eine Schließstellung bringbar ist, umfassend ein Faltdach, und je eine linke und eine rechte Führungsschiene, wobei die linke und die rechte Führungsschiene verschiebbar sind, wobei die linke und die rechte Führungsschiene jeweils in einen karosseriefestes Bauteilteil des Kraftfahrzeugs in Fahrzeuglängsrichtung versenkbar sind.

Erfindungsgemäß ist die Führungsschiene als Links- und als Rechtsteil, also im Wesentlichen spiegelbildlich, ausgebildet. Die Führungsschienen sind dabei in Fahrzeuglängsrichtung, oder Fahrtrichtung, verschiebbar. Dabei sind die Führungsschienen in einem karosseriefesten Bauteil versenkbar. Die Führungsschienen können hierbei massiv und jeweils einstückig oder beispielsweise auch teleskopisch, oder in anderer Weise jeweils mehrteilig ausgeführt sein.

Unter einem karosseriefesten Bauteil wird dabei jedes Bauteil verstanden, welches unbeweglich zur restlichen Fahrzeugkarosserie angeordnet ist, das kann beispielsweise ein Karosseriebauteil selbst sein.

Weiterbildungen der Erfindung sind in den abhängigen Ansprüchen, der Beschreibung sowie den beigefügten Zeichnungen angegeben.

In einer erfinderischen Ausführungsform ist das Faltdach im geöffneten Zustand in Fahrzeuglängsrichtung am hinteren Ende des Kraftfahrzeugdachs oder am hinteren Ende des für das Faltdach vorgesehenen Dachbereiches abgelegt.

Es ist jedoch auch möglich, dass das Faltdach am vorderen Ende des Kraftfahrzeugdachs, beispielsweise im Bereich des Windschutzscheibenrahmens abgelegt ist.

Erfindungsgemäß kann das karosseriefeste Bauteil links oder rechts oder an beiden Seiten des Kraftfahrzeugs eine B-, C- oder D-Säule bzw. ein an diesen Säulen befestigtes Bauteil sein.

Die B-Säule ist jene Säule, welche die Verbindung zwischen Fahrzeugboden und Fahrzeugdach in der Mitte der Fahrgastzelle herstellt.
Die C-Säule ist jene Säule, welche das Fahrzeugdach und den Kotflügel (hintere Seitenwand) am Fahrzeugheck miteinander verbindet.
Die D-Säule ist bei Kombis und Vans die vierte Säule.

Bevorzugt wird die C-Säule als karosseriefestes Bauteil verwendet, da diese im Vergleich zu den anderen Säulen voluminöser ausgebildet ist, und daher einen größeren Innenhohlraum als die anderen Säulen aufweist.

Da die Führungsschiene der Geometrie der B-,C-, oder D-Säule angepasst sein muss, ist es je nach Gestaltung der Gesamtkarosserie besonders vorteilhaft, wenn die B-,C-, oder D-Säule flach verläuft.

Bei Verwendung eines erfindungsgemäßen Targa-Dachs bei einem Kombi oder Van ist es vorteilhaft, die Führungsschiene in einem hinter dem Targa-Dach angeordneten feststehenden Blechdach oder sonstigem karosseriefesten Bauteil zu versenken. Hierbei sei zur Klarstellung noch erwähnt, dass die Führungsschiene nicht zur Gänze in einem karosseriefesten Blech-Bauteil versenkbar sein muss. Die Erfindung betrifft auch Ausführungen, in denen sich erst aus einer Kombination von Karosserie und (Innen-)Verkleidungsteilen eine Abdeckung der Führungsschienen ergibt, beispielsweise wenn die Karosserie so ausgebildet ist, dass die Führungsschienen nur teilweise von der Karosserie umschlossen sind, um z.B. für Wartungszwecke einen Zugang zu ermöglichen, aber durch zusätzliche Innenverkleidungsteile bzw. Teppiche etc. erst der Eindruck entsteht, dass die Führungsschienen im Kraftfahrzeug versenkt sind.

Zwischen der feststehenden Karosserie und der Führungsschiene ist eine Dichtung angeordnet, die ein Eindringen von Schmutz und/oder Wasser in die Karosserie verhindert.

Ist die Führungsschiene vollständig im karosseriefesten Bauteil versenkbar kann eine Abdeckkappe oder ein Abdeckdeckel vorgesehen werden welche die Öffnung des karosseriefesten Bauteils verschließt, und dem Kraftfahrzeug ein schöneres Design geben soll, wobei die Abdeckkappe manuell oder mittels einer entsprechenden Vorrichtung in der Öffnung des karosseriefesten Bauteils befestigt wird.

Wird das Faltdach in eine Geschlossenstellung gebracht, muss die Abdeckkappe vor dem Verschließen des Faltdachs entfernt werden. Ist eine entsprechende Vorrichtung vorhanden, entfernt die Vorrichtung die Abdeckkappe.

Gemäß einer weiteren Ausgestaltung der Erfindung ist zumindest eine Führungsschiene motorisch antreibbar. Bevorzugt wird hierbei als Antrieb ein Elektromotor verwendet. Der Antrieb kann aber auch manuell, hydraulisch oder pneumatisch erfolgen.

Falls die Abdeckkappe manuell befestigbar ist, muss diese vor dem Verschieben der Führungsschiene entfernt werden. Wird die Abdeckkappe nicht entfernt, so wird bei Betätigen des motorischen Antriebs eine Warnung abgegeben und der Vorgang erst durchgeführt, wenn die Abdeckkappe entfernt wurde.

In einer erfinderischen Ausführungsform kann der motorische Antrieb jeweils in der linken und in der rechten B, C, oder D-Säule angeordnet sein.

In einer weiteren erfinderischen Ausführung wird ein motorischer Antrieb verwendet der, in einer bevorzugten Ausführung, im Heckbereich in Fahrzeugquerrichtung mittig angeordnet ist und beide Führungsschienen antreibt.

Erfindungsgemäß weist die zumindest eine Führungsschiene eine reibschlüssige Verbindung zum motorischen Antrieb auf.

Dies kann beispielsweise mittels eines Seilzugs oder Antriebskabel erfolgen. Alternativ ist auch ein Reib- oder Zahnrad denkbar.

Gemäß einer Ausführungsform der Erfindung weist die zumindest eine Führungsschiene eine formschlüssige Verbindung zum motorischen Antrieb auf.

Beispielsweise erfolgt hier der Antrieb der zumindest einen Führungsschiene über eine Zahnstange.

Sowohl Seilzug oder Antriebskabel als auch die Zahnstange verlaufen im Wesentlichen parallel im Profil der Führungsschiene.

Für die reib- bzw. kraftschlüssige und formschlüssige Verbindung zum motorischen Antrieb der Führungsschiene ist jede dem Fachmann bekannte Variante denkbar.

Bevorzugt wird als motorischer Antrieb ein Stellmotor verwendet. Ein Stellmotor ist im Prinzip ein Servomotor, wobei der Betrieb des Stellmotors momenten-, geschwindigkeits- oder positionsgeregelt erfolgen kann.

Es ist jedoch auch denkbar, dass beispielsweise ein Schrittmotor verwendet wird.

Die Führungsschiene ist erfindungsgemäß ein Profilteil. Dabei wird die Führungsschiene bevorzugt als endloses Strangpressprofil hergestellt, welches entsprechend seiner erforderlichen Länge abgeschnitten wird. Die Führungsschiene weist eine Krümmung auf, welcher im Wesentlichen dem Verlauf des karosseriefesten Bauteils entspricht.
Als Werkstoff wird Metall, bevorzugt Aluminium, verwendet. Die Führungsschiene kann aber auch, wenn es die auf die Führungsschiene wirkenden Kräfte zulassen, aus Kunststoff, Verbundstoff oder anderen Stoffen hergestellt sein.
Das Profil weist hierbei einen der technischen Aufgabe angepassten Querschnitt auf. Beispielsweise kann die Führungsschiene eine Trägerplatte aufweisen, welche eine Befestigung einer Dichtung erlaubt. Das Profil kann so ausgebildet sein, dass im Profil zumindest ein Antriebskabel, im Wesentlichen parallel zur Fahrzeuglängsrichtung, verlaufen kann.

Das Faltdach ist am vordersten Punkt dauerhaft mit der Führungsschiene und/oder einem Abschlusselement verbunden. Das Abschlusselement ist ein biegesteifes Bauteil, welches bevorzugt aus Kunststoff hergestellt wird. Das Faltdach wird beispielsweise durch einen Keder mit dem Abschlusselement dauerhaft verbunden. Alternativ kann das Faltdach durch Kleben, Nähen oder Nieten mit dem Abschlusselement verbunden sein.

In einer weiteren bevorzugten erfinderischen Ausführungsform wird das Abschlusselement beispielsweise durch Verschrauben oder Vernieten mit der linken und rechten Führungsschiene dauerhaft verbunden. Bei dieser Ausführungsform können das Faltdach und die Führungsschienen nur gemeinsam verschoben werden. Um vor allem bei einer nicht parallelen Anordnung der beiden Führungsschienen einen stetigen Breitenausgleich durchführen zu können, ist das Abschlusselement beweglich mit den Führungsschienen verbunden. Hierzu kann das Abschlusselement beispielsweis mittels jeweils eines Gleiters mit der Führungsschiene verbunden sein. Erfindungsgemäß wäre es auch möglich, dass das Abschlusselement im Bereich der Führungsschienenbefestigung Langlöcher aufweist, in denen ein Bolzen oder eine Schraube, welche die Verbindung zu den Führungsschienen herstellt, gleiten kann.

Das Abschlusselement und/oder die Führungsschienen sind in der Geschlossenstellung mit einem Windschutzscheibenrahmen verbunden, wobei das Abschlusselement und/oder der Windschutzscheibenrahmen eine Dichtung aufweist, welche in der Geschlossenstellung gegen den Windschutzscheibenrahmen bzw. gegen einander gepresst wird.
Die Verriegelung erfolgt bevorzugt mittels Verschlusshaken und/oder Zentrierbolzen.

Erfindungsgemäß ist zumindest einer Führungsschiene und/oder dem Abschlusselement zumindest ein Stellmotor zugeordnet. Über ein Umschaltgetriebe ist die Antriebsbewegung auf ein weiteres Paar von Seilzügen oder Antriebskabel übertragbar, welche ebenfalls im Profil der Führungsschiene verlaufen, wodurch die Führungsschiene und das Abschlusselement in Fahrzeuglängsrichtung verfahrbar sind.

Es ist jedoch auch denkbar, dass für jedes Paar Antriebskabel, bzw. Zahnstangen, ein motorischer Antrieb vorgesehen wird.

Bei Verschieben der Führungsschienen wird das Faltdach in Fahrzeuglängsrichtung automatisch mitverfahren. Dies lässt sich relativ einfach realisieren, indem dem Windschutzscheibenrahmen zugewandten Ende ein mechanischer Mitnehmer angeordnet ist.

Zwischen der linken und rechten Führungsschiene ist zumindest ein Dachspriegel angeordnet.

Der Dachspriegel verläuft in Fahrzeugquerrichtung wobei das Faltdach an dem zumindest einem Dachspriegel befestigbar ist. Das Faltdach wird hierbei beispielsweise durch Kleben, oder Einnähen des Dachspriegels in das Faltdach, mit dem Dachspriegel dauerhaft verbunden. Der zumindest eine Dachspriegel weist eine der in Fahrzeugquerrichtung entsprechenden Dachkontur angepasste Bombierung auf und ist in der Führungsschiene längsverschieblich angeordnet.
Bevorzugt ist der Dachspriegel ein Hohlprofil, welcher durch Strangpressziehen hergestellt wird, wobei als Werkstoff bevorzugt Aluminium verwendet wird.

In einer weiteren erfinderischen Ausführungsform ist in der linken und rechten Führungsschiene jeweils zumindest ein Gleiter angeordnet.

Der Dachspriegel ist mit Gleitern verbunden, wobei der Dachspriegel auf den Gleitern in Fahrzeugquerrichtung verschiebbar angeordnet ist.

Da der Dachspriegel in Querrichtung verschiebbar ist, kann das Dach auch einen nicht parallelen Verlauf aufweisen, da der Dachspriegel auf dem Gleiter eine Differenzbewegung machen kann, wodurch ein Breitenausgleich erfolgen kann.

Die Gleiter sind innerhalb der Führungsschiene, welche als Profil ausgebildet ist, mittels eines Gleitschuhs geführt. Der Gleitschuh weist dabei eine dem Profil der Führungsschiene angepasste Geometrie auf. Der Gleitschuh ist so ausgebildet, dass eine Längsverschiebung in der Führungsschiene ohne ein Verkanten durchgeführt werden kann. Das Profil der Führungsschiene ist in Fahrzeuglängsrichtung geschlitzt, bzw. ein nach oben hin offenes Profil, so dass der Gleiter aus der Führungsschiene zur Verbindung mit einem Dachspriegel, ragen kann. Es ist jedoch auch denkbar, dass das Profil an der Seite geschlitzt ausgebildet ist, wobei bevorzugt die Innenseite der Führungsschiene, also jene Seite die Richtung Insassenkabine zeigt, geschlitzt ausgebildet ist.
Der Gleiter wird bevorzugt als Spritzgussteil hergestellt, wobei bevorzugt Kunststoff als Werkstoff verwendet wird.

Erfindungsgemäß weist der Gleiter einen Gleitarm auf, wobei der Dachspriegel über eine Gleitbuchse verschiebbar auf dem Gleitarm angeordnet ist, und wobei an jedem Ende des Dachspriegels eine Gleitbuchse vorgesehen ist.
Der Gleitarm ist im Wesentlichen eine Erstreckung des Gleiters in Fahrzeugquerrichtung. Wobei sich der Gleitarm in Richtung Insassenkabine erstreckt, und wobei der Gleitarm bevorzugt eine Form aufweist, welche eine Verdrehung des Dachspriegels um die Längsachse des Gleitarms verhindert. Am Ende des Gleitarms weist dieser eine Verliersicherung auf, die verhindert, dass der Dachspriegel unbeabsichtigt vom Gleiter gezogen werden kann. Die Gleitbuchse ist auf dem Gleitarm verschiebbar angeordnet, wobei an jedem Ende des Dachspriegels eine Gleitbuchse angeordnet ist. Die Gleitbuchse ist bevorzugt aus Kunststoff hergestellt.

Die Anzahl der Dachspriegel bestimmen die Anzahl der Faltungen des Faltdachs. Man kann gezielt durch die Bestimmung der Anzahl der Dachspriegel festlegen, wie oft sich das Faltdach falten soll. Die Ablagehöhe des Faltdachs im geöffneten Zustand wird ebenfalls durch die Anzahl der Dachspriegel bestimmt.

In einer weiteren Ausführungsform sind im Faltdach, das bevorzugt ein Verdeckstoff ist, transparente Elemente, beispielsweise Glas, angeordnet, wobei die Länge der Glaselemente in Fahrzeuglängsrichtung, bzw. die Anzahl der in Fahrzeuglängsrichtung hintereinander angeordneten Glaselemente die Anzahl bzw. die Position der Dachspriegel und somit die Anzahl der Faltungen bestimmen, da der Dachspriegel nur zwischen den transparenten Elementen, zur Befestigung des Faltdachs am Dachspriegel, angeordnet werden kann.

Durch das Verschieben der linken und rechten Führungsschiene werden die Gleiter in der linken und rechten Führungsschiene mit verschoben. Dabei werden die Gleitschuhe der Gleiter in der Öffnungsstellung in einer bevorzugten erfinderischen Ausführungsform in eine sogenannte Blockauf-Block Anordnung aneinandergereiht.

Erfindungsgemäß weist die vorderste Faltung des gefalteten Faltdachs bei einer Öffnungsstellung einen Winkel zur Normalebene auf die Fahrzeuglängsachse von -45° bis 80°, bevorzugt 10° bis 80°, noch bevorzugter 30° bis 60°, auf. Da das Faltdach aus einem Verdeckstoff, bzw. im Verdeckstoff eingearbeitete starren Teilen, besteht und der Verdeckstoff nicht steif ist, und im gefalteten Zustand durchhängen kann, bzw. die im Verdeckstoff eingearbeiteten starren Teile bombiert sein können, ist die Angabe des Winkels nur ein "Durchschnittswert" für die gesamte erste Faltung. Die Fahrzeuglängsachse verläuft parallel zur Fahrzeuglängsrichtung. Bei einem Winkel von -45° ist zumindest die vorderste Faltung nach vorne geneigt abgelegt. Diese Ausgestaltung kann durch die Anordnung des Abschlusselements sowie durch die Ausbildung der Faltdachbefestigung oder durch den Abstand zwischen dem Abschlusselement und dem ersten Gleiter ermöglicht werden. Dadurch ist es möglich, bei geöffnetem Dach Zugluft, Luftverwirbelungen und Windgeräusche im Kraftfahrzeuginneren zu reduzieren, ebenso Zugluft von hinten, vergleichbar einem Windschott. Die Anordnung kann somit einerseits als Windabweiser für den Fahrzeuginnenraum und andererseits als Spoiler, also als ein die Aerodynamik beeinflussendes Bauteil, ausgebildet sein.

Die Lagerung der linken und rechten Führungsschiene erfolgt mittels Rollenlager im karosseriefesten Bauteil.
Dadurch wird eine besonders reibungsarme Führung der Führungsschiene im karosseriefesten Bauteil realisiert. Rollen- bzw. Nadellager werden wegen ihren geringen Bauraumbedarf bevorzugt verwendet. Es kann natürlich, im Rahmen der Erfindung, und wenn es der Bauraum im karosseriefesten Bauteil zulässt, auch ein anderer Wälzlagertyp verwendet werden. Es ist erfindungsgemäß natürlich auch möglich, dass Gleitlager verwendet werden.

In einer weiteren erfinderischen Ausführungsform verlaufen die linke und die rechte Führungsschiene in Fahrzeuglängsrichtung nicht parallel, wobei die Führungsschienen zur Fahrzeuglängsachse vorzugsweise links und rechts denselben Winkel einschließen. Es ist natürlich auch möglich dass die Führungsschienen jeweils unterschiedliche Winkel zur Fahrzeuglängsrichtung aufweisen.

### Kurzbeschreibung der Zeichnungen

Die Erfindung wird im Folgenden beispielhaft unter Bezugnahme auf die Zeichnungen beschrieben.
- Fig. 1: ist eine perspektivische Ansicht eines erfindungsgemäßen Faltdaches in geöffnetem Zustand.
- Fig. 2: zeigt eine Teilansicht eines erfindungsgemäßen Faltdaches in geöffnetem Zustand.
- Fig. 3: ist eine perspektivische Ansicht eines Faltdaches gemäß Fig. 1 in geschlossenem Zustand.
- Fig. 4: ist eine weitere perspektivische Ansicht eines Faltdaches gemäß Fig. 1 in geschlossenem Zustand.
- Fig. 5: ist eine Draufsicht eines Faltdachs gemäß Fig. 1 in geschlossenem Zustand.
- Fig. 6: ist eine Teilschnittdarstellung in Fahrzeugquerrichtung.

### Detaillierte Beschreibung der Erfindung

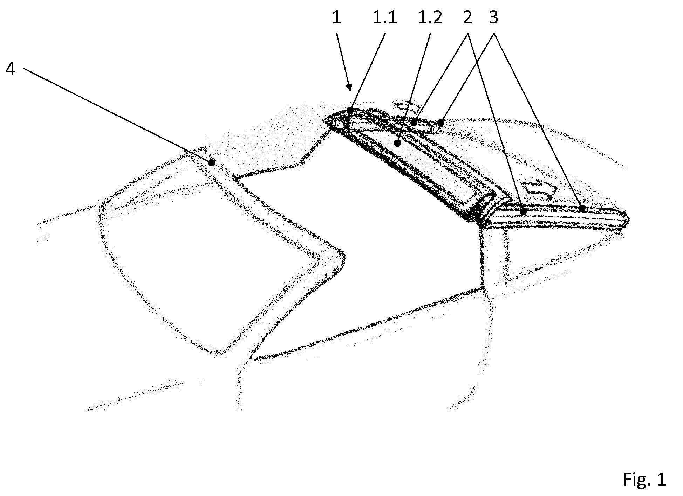

In Fig. 1 ist eine erfindungsgemäße Targa-Dach Variante in der Öffnungsstellung dargestellt. Zur leichteren Erkennbarkeit ist die linke und rechte Führungsschiene 2 hervorgehoben dargestellt. Die Führungsschienen sind in den karosseriefesten Bauteilen 3, in Pfeilrichtung, versenkt. Das Faltdach 1 weist einen Verdeckstoff 1.1 auf, in dem transparente Elemente 1.2, beispielsweise Glaselemente, integriert sind.
Der Verdeckstoff 1.1 weist zwei Faltungen auf, was auf zwei, mit der Führungsschiene 2 verbundene, Dachspriegel 5 schließt (nicht dargestellt).

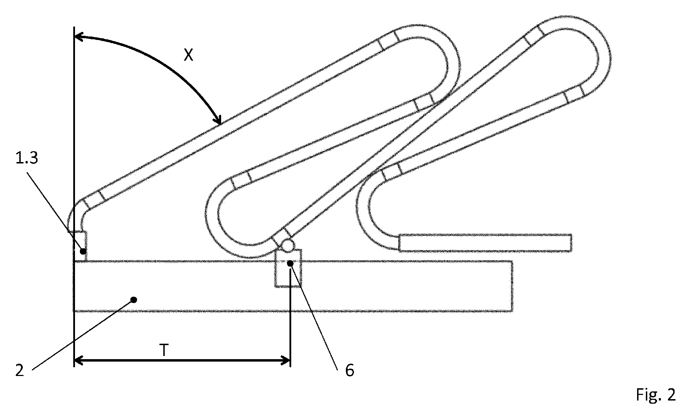

Eine Teilansicht eines erfindungsgemäßen Faltdachs 1 wird in Fig. 2 dargestellt. Dabei weist das vorderste Element, beispielsweise das Abschlusselement 1.3, des gefalteten Faltdachs 1 einen Winkel X zur Normalebene auf die Fahrzeuglängsachse von -45° bis 80° auf. Mit Hilfe des Abstands T zwischen dem Abschlusselement 1.3 und dem ersten Gleiter 6 lässt sich der Winkel X variieren. Dadurch wirkt das Faltdach 1 im geöffneten Zustand einerseits als Windabweiser für den Fahrzeuginnenraum, andererseits als Spoiler.

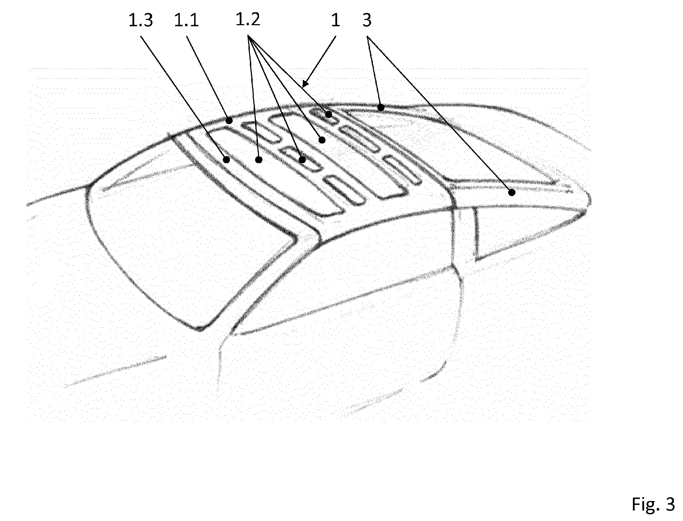

In Fig. 3 wird das erfindungsgemäße Dach 1 in einer Geschlossenstellung dargestellt. Die Führungsschienen 2 (nicht dargestellt) sind über Verschlusselemente, die im Abschlusselement 1.3 angeordnet sind, mit dem Windschutzscheibenrahmen 4 verbunden. Der Verdeckstoff 1.1 weist eine Vielzahl von transparenten Elementen 1.2 auf, wobei die transparenten Elemente 1.2 unterschiedliche Geometrien aufweisen. Die Führungsschienen 2 sind an ihrem anderen Ende in den karosseriefesten Bauteilen 3 über Wälz- oder Gleitlager, bevorzugt Rollen- bzw. Nadellager gelagert.

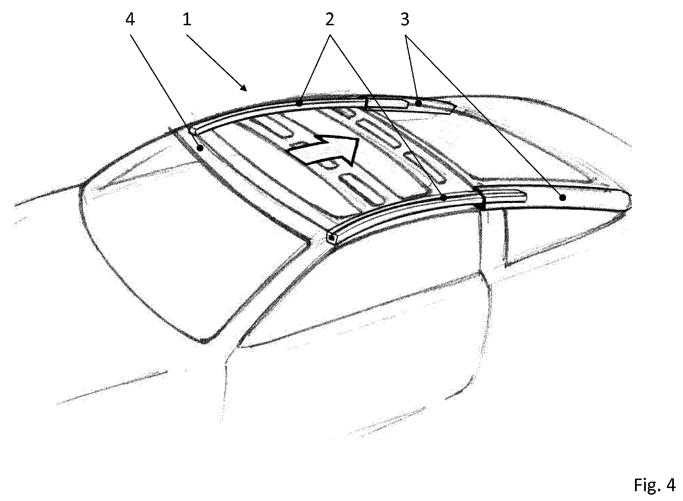

Eine weitere Darstellung in der Geschlossenstellung wird in Fig. 4 gezeigt, wobei die Anordnung der Führungsschienen 2 im Dach eines Kraftfahrzeugs dargestellt ist, wobei, in Fahrzeuglängsrichtung, die rechte Führungsschiene 2 erfindungsgemäß massiv ausgebildet dargestellt ist, während alternativ die linke Führungsschiene 2 als Profil dargestellt ist. Die Führungsschienen 2 sind über Verschlusshaken und/oder Zentrierbolzen, die an einem Ende der Führungsschienen 2 angeordnet sind, mit dem Windschutzscheibenrahmen 4 verbunden. Das andere Ende der Führungsschienen 2 ist in den C-Säulen, welche das karosseriefeste Bauteil 3 darstellen, gelagert. Zur Vermeidung, dass Schmutz und/oder Wasser eindringen kann wird zwischen der Führungsschiene 2 und dem karosseriefesten Bauteil 3 eine Dichtung vorgesehen. Das Faltdach 1 wird in Pfeilrichtung geöffnet.

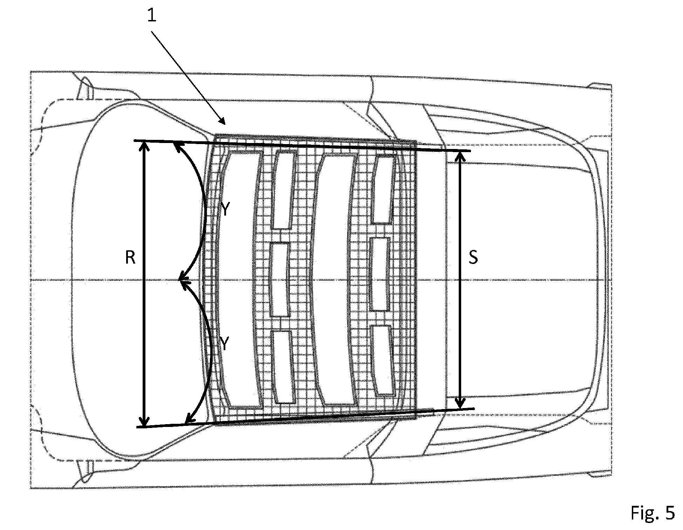

Fig. 5 zeigt eine Draufsicht eines erfindungsgemäßen Faltdachs 1. Die linke und rechte Führungsschiene 2 verlaufen in Fahrzeuglängsrichtung gesehen nicht parallel, wobei in einer bevorzugten Ausführungsform der Abstand R im vorderen Bereich des Kraftfahrzeugs größer ist als der Abstand S im hinteren Bereich des Kraftfahrzeugs. Die linke und die rechte Führungsschiene 2 schließen dabei in einer erfinderischen Ausführungsform einen Winkel Y zur Fahrzeuglängsrichtung ein. Es ist jedoch auch möglich, dass die linke und rechte Führungsschiene 2 jeweils einen unterschiedlichen Winkel zur Fahrzeuglängsrichtung einschließen.

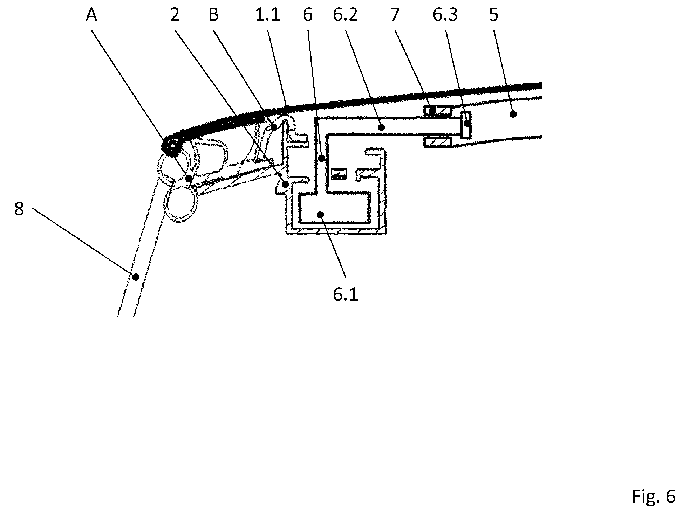

Eine Teilschnittdarstellung wird in Fig. 6 dargestellt. Die Führungsschiene 2 weist eine Profilform auf, welche es erlaubt mehrere Funktionen zu erfüllen. Die Außenkontur ist so ausgebildet, dass die Führungsschiene 2 in Wälzlagern, die im karosseriefesten Bauteil angeordnet sind, lagerbar ist. Das Innenprofil der Führungsschiene 2 ist so ausgebildet, dass ein Gleitschuh 6.1 eines Gleiters 6 verdrehsicher geführt ist. Das Profil kann in einer weiteren erfinderischen Ausbildung Aufnahmen für Zugseile oder Antriebskabel (nicht dargestellt) aufweisen. Die Führungsschiene 2 weist eine Trägerplatte auf, die sich in Richtung Fahrzeugaußenseite bis zur Seitenscheibe erstreckt. Auf dieser Trägerplatte ist eine Dichtung A angeordnet, die den Verdeckstoff 1.1 gegen die Seitenscheibe 8 abdichtet und im Wesentlichen das Eindringen von Umwelteinflüssen verhindert. Die Führungsschiene 2 weist eine zweite Dichtung B auf, welche auf einer weiteren Trägerplatte des Profils der Führungsschiene 2 angeordnet ist. Die Dichtungen A, B werden bevorzugt durch Kleben mit der Führungsschiene 2 dauerhaft verbunden. Dichtung B dichtet gegen den Verdeckstoff 1.1 und Dichtung A ab und verhindert, dass Schmutz und/oder Wasser in die Führungsschiene 2 eindringen können. Vor dem Versenken der Führungsschienen 2 in das karosseriefeste Bauteil 3 wird die Seitenscheibe 8 leicht geöffnet, um eine Beschädigung der Dichtung A zu vermeiden. Die Führungsschiene 2 weist ein nach oben hin offenes Profil auf, durch welches der Gleiter 6 ragt. Während der Gleitschuh 6.1 im Profil der Führungsschiene 2 geführt ist, weist der Gleiter 6 einen Gleitarm 6.2 auf, welcher sich im Wesentlichen in y-Richtung, oder auch Fahrzeugquerrichtung, erstreckt. Auf dem Gleitarm 6.2 ist ein Dachspriegel 5 angeordnet, der einen Breitenausgleich, insbesondere bei nicht parallel verlaufenden Dachverläufen, ermöglicht. Der Gleitarm 6.2 ist in einer bevorzugten Ausführungsform mit einer Geometrie ausgebildet, die ein Verdrehen des Dachspriegels 5 um die Längsachse des Gleitarms 6.2 verhindert. Damit der Dachspriegel 5 nicht unbeabsichtigt vom Gleiter 6 bzw. Gleitarm 6.2 gezogen werden kann, weist der Gleiter 6 am Ende des Gleitarms 6.2 eine Verliersicherung 6.3 auf, die einen größeren Außendurchmesser aufweist als eine am Ende des Dachspriegels angeordnete Bohrung einer Gleitbuchse 7. Die Gleitbuchse 7 ist jeweils an einem Ende des Dachspriegels 5, bevorzugt durch Einpressen, angeordnet und dient zur Lagerung bzw. zum Verschieben des Dachspriegels 5 auf dem Gleiter 6.

### Bezugszeichenliste

- 1: Faltdach
- 1.1: Verdeckstoff
- 1.2: transparente Elemente
- 1.3: Abschlusselement
- 2: Führungsschiene
- 3: karosseriefestes Bauteil
- 4: Windschutzscheibenrahmen
- 5: Dachspriegel
- 6: Gleiter
- 6.1: Gleitschuh
- 6.2: Gleitarm
- 6.3: Verliersicherung
- 7: Gleitbuchse
- 8: Seitenscheibe

- A: Dichtung
- B: Dichtung
- R: Abstand
- S: Abstand
- T: Abstand
- X: Winkel
- Y: Winkel

## Patentansprüche

1. Dach für ein Kraftfahrzeug, insbesondere ein Targa-Dach, welches in eine Öffnungsstellung und in eine Schließstellung bringbar ist, umfassend ein Faltdach (1), und je eine linke und eine rechte Führungsschiene (2), wobei die linke und die rechte Führungsschiene (2) verschiebbar sind,
**dadurch gekennzeichnet, dass** die linke und die rechte Führungsschiene (2) jeweils in einem karosseriefesten Bauteil (3) des Kraftfahrzeugs in Fahrzeuglängsrichtung versenkbar sind.

2. Dach für ein Kraftfahrzeug nach Anspruch 1,
**dadurch gekennzeichnet, dass** das Faltdach (1) im geöffneten Zustand in Fahrzeuglängsrichtung am hinteren Ende des für das Faltdach vorgesehene Dachbereiches abgelegt ist.

3. Dach für ein Kraftfahrzeug nach Anspruch 1,
**dadurch gekennzeichnet, dass** das karosseriefeste Bauteil (3) eine B-, C-, oder D-Säule ist, oder im Bereich einer B-, C-, oder D-Säule angeordnet ist.

4. Dach für ein Kraftfahrzeug nach Anspruch 1,
**dadurch gekennzeichnet, dass** zumindest eine Führungsschiene (2) motorisch antreibbar ist.

5. Dach für ein Kraftfahrzeug nach Anspruch 4,
**dadurch gekennzeichnet, dass** zumindest eine Führungsschiene (2) eine formschlüssige Verbindung zum motorischen Antrieb aufweist.

6. Dach für ein Kraftfahrzeug nach Anspruch 4,
**dadurch gekennzeichnet, dass** zumindest eine Führungsschiene (2) eine reibschlüssige Verbindung zum motorischen Antrieb aufweist.

7. Dach für ein Kraftfahrzeug nach zumindest einem der vorhergehenden Ansprüche 4 bis 6,
**dadurch gekennzeichnet, dass** der motorische Antrieb ein Stellmotor ist.

8. Dach für ein Kraftfahrzeug nach zumindest einem der vorhergehenden Ansprüche,
**dadurch gekennzeichnet, dass** die Führungsschiene (2) ein Profilteil ist.

9. Dach für ein Kraftfahrzeug nach zumindest einem der vorhergehenden Ansprüche,
**dadurch gekennzeichnet, dass** das Faltdach (1) an seinem vordersten Punkt dauerhaft mit der Führungsschiene (2) und/oder einem Abschlusselement (1.3) verbunden ist.

10. Dach für ein Kraftfahrzeug nach Anspruch 9,
**dadurch gekennzeichnet, dass** das Abschlusselement (1.3) relativ zur Führungsschiene (2) in Fahrzeugquerrichtung verschiebbar ist.

11. Dach für ein Kraftfahrzeug nach zumindest einem der vorhergehenden Ansprüche 9 und 10,
**dadurch gekennzeichnet, dass** der zumindest einen Führungsschiene (2) und/oder dem Abschlusselement (1.3) zumindest ein Stellmotor zugeordnet ist.

12. Dach für ein Kraftfahrzeug nach zumindest einem der vorhergehenden Ansprüche,
**dadurch gekennzeichnet, dass** zwischen der linken und rechten Führungsschiene (2) zumindest ein Dachspriegel (5) angeordnet ist.

13. Dach für ein Kraftfahrzeug nach zumindest einem der vorhergehenden Ansprüche,
**dadurch gekennzeichnet, dass** in der linken und rechten Führungsschiene (2) jeweils zumindest ein Gleiter (6) angeordnet ist.

14. Dach für ein Kraftfahrzeug nach den Ansprüchen 12 und 13,
**dadurch gekennzeichnet, dass** der Dachspriegel (5) mit den Gleitern (6) verbunden ist, wobei der Dachspriegel (5) auf den Gleitern (6) in Fahrzeugquerrichtung verschiebbar angeordnet ist.

15. Dach für ein Kraftfahrzeug nach Anspruch 13,
**dadurch gekennzeichnet, dass** der Gleiter (6) innerhalb der Führungsschiene (2), welche vorzugsweise als Profil ausgebildet ist, geführt ist.

16. Dach für ein Kraftfahrzeug nach Anspruch 14,
**dadurch gekennzeichnet, dass** der Gleiter (6) einen Gleitarm (6.2) aufweist, wobei der Dachspriegel (5) über eine Gleitbuchse (7) verschiebbar auf dem Gleitarm (6.2) angeordnet ist, und wobei an jedem Ende des Dachspriegels (5) jeweils eine Gleitbuchse (7) vorgesehen ist.

17. Dach für ein Kraftfahrzeug nach Anspruch 12,
**dadurch gekennzeichnet, dass** die Anzahl der Dachspriegel (5) die Anzahl der Faltungen des Faltdachs (1.1) bestimmen.

18. Dach für ein Kraftfahrzeug nach Anspruch 13,
**dadurch gekennzeichnet, dass** durch das Verschieben der linken und rechten Führungsschiene (2) die Gleiter (6) in der linken und rechten Führungsschiene (2) in Längsrichtung mit verschoben werden.

19. Dach für ein Kraftfahrzeug nach zumindest einem der vorhergehenden Ansprüche,
**dadurch gekennzeichnet, dass** die vorderste Faltung des gefalteten Faltdachs (1) bei einer Öffnungsstellung einen Winkel (X) zur Normalebene auf die Fahrzeuglängsachse von -45° bis 80°, bevorzugt 10° bis 80°, noch bevorzugter 30° bis 60°, aufweist.

20. Dach für ein Kraftfahrzeug nach zumindest einem der vorhergehenden Ansprüche,
**dadurch gekennzeichnet, dass** die Lagerung der linken und rechten Führungsschiene (2) mittels Wälz- oder Gleitlager, insbesondere ein Nadellager, im karosseriefesten Bauteil (3) erfolgt.

21. Dach für ein Kraftfahrzeug nach zumindest einem der vorhergehenden Ansprüche,
**dadurch gekennzeichnet, dass** die linke und die rechte Führungsschiene (2) in Fahrzeuglängsrichtung nicht parallel verlaufen, wobei die Führungsschienen (2) zur Fahrzeuglängsachse vorzugsweise links und rechts denselben Winkel (Y) einschließen.

## Claims

1. Roof for a motor vehicle, in particular a Targa roof, which roof can be moved into an open position and into a closed position, comprising a folding roof (1) and in each case one left-hand and one right-hand guide rail (2), the left-hand and the right-hand guide rail (2) being displaceable,
**characterized in that** the left-hand and the right-hand guide rail (2) can be recessed in each case in a body-mounted component (3) of the motor vehicle in the vehicle longitudinal direction.

2. Roof for a motor vehicle according to Claim 1,
**characterized in that**, in the open state, the folding roof (1) is stowed at the rear end of the roof region which is provided for the folding roof in the vehicle longitudinal direction.

3. Roof for a motor vehicle according to Claim 1,
**characterized in that** the body-mounted component (3) is a B-pillar, C-pillar or D-pillar, or is arranged in the region of a B-pillar, C-pillar or D-pillar.

4. Roof for a motor vehicle according to Claim 1,
**characterized in that** at least one guide rail (2) can be driven by motor.

5. Roof for a motor vehicle according to Claim 4,
**characterized in that** at least one guide rail (2) has a positively locking connection to the motor drive.

6. Roof for a motor vehicle according to Claim 4,
**characterized in that** at least one guide rail (2) has a frictional connection to the motor drive.

7. Roof for a motor vehicle according to at least one of the preceding Claims 4 to 6,
**characterized in that** the motor drive is an actuating motor.

8. Roof for a motor vehicle according to at least one of the preceding claims,
**characterized in that** the guide rail (2) is a profiled part.

9. Roof for a motor vehicle according to at least one of the preceding claims,
**characterized in that**, at its foremost point, the folding roof (1) is connected permanently to the guide rail (2) and/or a closure element (1.3).

10. Roof for a motor vehicle according to Claim 9,
**characterized in that** the closure element (1.3) can be displaced relative to the guide rail (2) in the vehicle transverse direction.

11. Roof for a motor vehicle according to at least one of the preceding Claims 9 and 10,
**characterized in that** the at least one guide rail (2) and/or the closure element (1.3) are/is assigned at least one actuating motor.

12. Roof for a motor vehicle according to at least one of the preceding claims,
**characterized in that** at least one roof bow (5) is arranged between the left-hand and right-hand guide rail (2).

13. Roof for a motor vehicle according to at least one of the preceding claims,
**characterized in that** in each case at least one slider (6) is arranged in the left-hand and right-hand guide rail (2).

14. Roof for a motor vehicle according to Claims 12 and 13,
**characterized in that** the roof bow (5) is connected to the sliders (6), the roof bow (5) being arranged such that it can be displaced in the vehicle transverse direction on the sliders (6).

15. Roof for a motor vehicle according to Claim 13,
**characterized in that** the slider (6) is guided within the guide rail (2) which is preferably configured as a profile.

16. Roof for a motor vehicle according to Claim 14,
**characterized in that** the slider (6) has a sliding arm (6.2), the roof bow (5) being arranged on the sliding arm (6.2) such that it can be displaced via a sliding bush (7), and in each case one sliding bush (7) being provided at each end of the roof bow (5).

17. Roof for a motor vehicle according to Claim 12,
**characterized in that** the number of roof bows (5) determines the number of folds of the folding roof (1.1).

18. Roof for a motor vehicle according to Claim 13,
**characterized in that**, as a result of the displacement of the left-hand and right-hand guide rail (2), the sliders (6) are also displaced in the longitudinal direction in the left-hand and right-hand guide rail (2).

19. Roof for a motor vehicle according to at least one of the preceding claims,
**characterized in that**, in an open position, the foremost fold of the folded folding roof (1) has an angle (X) with respect to the perpendicular plane onto the vehicle longitudinal axis of from -45° to 80°, preferably 10° to 80°, more preferably 30° to 60°.

20. Roof for a motor vehicle according to at least one of the preceding claims,
**characterized in that** the mounting of the left-hand and right-hand guide rail (2) takes place by means of antifriction or plain bearings, in particular a needle bearing, in the body-mounted component (3).

21. Roof for a motor vehicle according to at least one of the preceding claims,
**characterized in that** the left-hand and the right-hand guide rail (2) do not run in parallel in the vehicle longitudinal direction, the guide rails (2) preferably enclosing the same angle (Y) with respect to the vehicle longitudinal axis on the left and the right.

## Revendications

1. Toit pour un véhicule automobile, en particulier un toit Targa, qui peut être amené dans une position d'ouverture et dans une position de fermeture, comprenant un toit pliant (1) et des rails de guidage gauche et droit (2), les rails de guidage gauche et droit (2) étant déplaçables, **caractérisé en ce que** les rails de guidage gauche et droit (2) peuvent être enfoncés à chaque fois dans un composant fixé à la carrosserie (3) du véhicule automobile dans la direction longitudinale du véhicule.

2. Toit pour un véhicule automobile selon la revendication 1,
**caractérisé en ce que** le toit pliant (1), dans l'état ouvert dans la direction longitudinale du véhicule, est déposé à l'extrémité arrière de la région de toit prévue pour le toit pliant.

3. Toit pour un véhicule automobile selon la revendication 1,
**caractérisé en ce que** le composant fixé à la carrosserie (3) est une colonne B, C ou D, ou est disposé dans la région d'une colonne B, C ou D.

4. Toit pour un véhicule automobile selon la revendication 1,
**caractérisé en ce qu'**au moins un rail de guidage (2) peut être entraîné de manière motorisée.

5. Toit pour un véhicule automobile selon la revendication 4,
**caractérisé en ce qu'**au moins un rail de guidage (2) présente une connexion par engagement par correspondance de formes à l'entraînement motorisé.

6. Toit pour un véhicule automobile selon la revendication 4,
**caractérisé en ce qu'**au moins un rail de guidage (2) présente une connexion par engagement par friction à l'entraînement motorisé.

7. Toit pour un véhicule automobile selon au moins l'une quelconque des revendications précédentes 4 à 6,
**caractérisé en ce que** l'entraînement motorisé est un moteur de commande.

8. Toit pour un véhicule automobile selon au moins l'une quelconque des revendications précédentes,
**caractérisé en ce que** le rail de guidage (2) est une pièce profilée.

9. Toit pour un véhicule automobile selon au moins l'une quelconque des revendications précédentes,
**caractérisé en ce que** le toit pliant (1) est connecté au niveau de son point le plus antérieur de manière durable au rail de guidage (2) et/ou à un élément de terminaison (1.3).

10. Toit pour un véhicule automobile selon la revendication 9,
**caractérisé en ce que** l'élément de terminaison (1.3) peut être déplacé par rapport au rail de guidage (2) dans la direction transversale du véhicule.

11. Toit pour un véhicule automobile selon au moins l'une quelconque des revendications précédentes 9 et 10,
**caractérisé en ce qu'**au moins un moteur de commande est associé à l'au moins un rail de guidage (2) et/ou à l'élément de terminaison (1.3).

12. Toit pour un véhicule automobile selon au moins l'une quelconque des revendications précédentes,
**caractérisé en ce qu'**entre le rail de guidage gauche et le rail de guidage droit (2) est disposé au moins un arceau de toit (5).

13. Toit pour un véhicule automobile selon au moins l'une quelconque des revendications précédentes,
**caractérisé en ce qu'**à chaque fois au moins un coulisseau (6) est disposé dans le rail de guidage gauche et le rail de guidage droit (2).

14. Toit pour un véhicule automobile selon les revendications 12 et 13,
**caractérisé en ce que** l'arceau de toit (5) est connecté aux coulisseaux (6), l'arceau de toit (5) étant disposé de manière déplaçable sur les coulisseaux (6) dans la direction transversale du véhicule.

15. Toit pour un véhicule automobile selon la revendication 13,
**caractérisé en ce que** le coulisseau (6) est guidé à l'intérieur du rail de guidage (2) qui est réalisé de préférence sous forme de profilé.

16. Toit pour un véhicule automobile selon la revendication 14,
**caractérisé en ce que** le coulisseau (6) présente un bras coulissant (6.2), l'arceau de toit (5) étant disposé sur le bras coulissant (6.2) de manière à pouvoir être déplacé par le biais d'un manchon coulissant (7), et un manchon coulissant respectif (7) étant prévu à chaque extrémité de l'arceau de toit (5).

17. Toit pour un véhicule automobile selon la revendication 12,
**caractérisé en ce que** le nombre des arceaux de toit (5) détermine le nombre des plis du toit pliant (1.1).

18. Toit pour un véhicule automobile selon la revendication 13,
**caractérisé en ce que** par le déplacement des rails de guidage gauche et droit (2), les coulisseaux (6) sont déplacés en même temps dans la direction longitudinale dans les rails de guidage gauche et droit (2).

19. Toit pour un véhicule automobile selon au moins l'une quelconque des revendications précédentes,
**caractérisé en ce que** le pli le plus antérieur du toit pliant plié (1), dans une position d'ouverture, forme un angle (X) avec le plan normal à l'axe longitudinal du véhicule de -45° à 80°, de préférence de 10° à 80°, encore plus préférablement de 30° à 60°.

20. Toit pour un véhicule automobile selon au moins l'une quelconque des revendications précédentes,
**caractérisé en ce que** le support sur palier des rails de guidage gauche et droit (2) s'effectue par des paliers à roulement ou des paliers lisses, en particulier un palier à aiguilles, dans un composant fixé à la carrosserie (3).

21. Toit pour un véhicule automobile selon au moins l'une quelconque des revendications précédentes,
**caractérisé en ce que** les rails de guidage gauche et droit (2) ne s'étendent pas parallèlement dans la direction longitudinale du véhicule, les rails de guidage (2) formant avec l'axe longitudinal du véhicule de préférence le même angle (Y) à gauche et à droite.
